# EUROPÄISCHE PATENTSCHRIFT

(11) **EP 3 948 493 B1**
(45) Veröffentlichungstag und Bekanntmachung des Hinweises auf die Patenterteilung: **03.12.2025**
(21) Anmeldenummer: 20705031.1
(22) Anmeldetag: 10.02.2020
(51) Int. Cl.: G06F 3/01, G06F 3/16, G06F 3/038

(54) **VERFAHREN UND VORRICHTUNG ZUR INTERAKTION MIT EINEM UMGEBUNGSOBJEKT IM UMFELD EINES FAHRZEUGS**
METHOD AND DEVICE FOR INTERACTION WITH AN ENVIRONMENTAL OBJECT IN THE ENVIRONMENT OF A VEHICLE
PROCÉDÉ ET DISPOSITIF D'INTERACTION AVEC UN OBJET ENVIRONNEMENTAL DANS L'ENVIRONNEMENT D'UN VÉHICULE

(30) Priorität: 01.04.2019 DE 102019204542
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: KASSNER, Astrid, 10117 Berlin (DE)
(86) Internationale Anmeldenummer: PCT/EP2020/053362
(87) Internationale Veröffentlichungsnummer: WO 2020/200557

(56) Entgegenhaltungen:
- DE-A1- 102012 219 280
- DE-A1- 102017 215 161
- US-A1- 2014 164 928
- US-A1- 2017 176 207

## Beschreibung

Die vorliegende Erfindung betrifft ein Verfahren zur Interaktion mit einem Umgebungsobjekt im Umfeld eines Fahrzeugs. Die vorliegende Erfindung betrifft weiterhin eine Vorrichtung zur Durchführung des Verfahrens und ein Fahrzeug, das eingerichtet ist, ein solches Verfahren auszuführen oder eine solche Vorrichtung aufweist.

Bei den Nutzern eines Kraftfahrzeuges kann während der Fahrt der Wunsch auftreten, Informationen über einen "Ort von Interesse" entlang der Fahrtroute, mittlerweile als Point of Interest (POI) geläufig, zu erfahren. Diese POI sind in dem digitalen Kartenmaterial von Navigationssystemen und Routenplanern mit ihrer jeweiligen Kategorie, wie beispielsweise Übernachten / Hotel oder Service / Tankstelle, Raststätte, Restaurant, ihren Koordinaten auf der Karte und gegebenenfalls weiteren Informationen wie einer zugeordneten Telefonnummer gespeichert. Neben der Informationsausgabe zu einem POI kann auch vorgesehen werden, basierend auf dem ausgewählten POI zugeordnete Funktionen auszuführen, beispielsweise den POI als neues Fahrziel zu übernehmen und in Verbindung mit einer Bestimmung der aktuellen Fahrzeugposition aus GPS-Signalen eine angepasste Fahrtroute zu berechnen oder die zugeordnete Telefonnummer direkt anzuwählen.

Hierfür muss zunächst der betreffende POI ermittelt werden. Dieses kann durch eine Suche im fahrzeugeigenen Navigationsgerät oder in einer Navigationsanwendung eines mitgeführten Mobilfunkgerätes erfolgen, wobei gegebenenfalls zunächst der Name des entsprechenden POI ermittelt werden muss um dann die gewünschte Information in einer Webbrowseranwendung zu suchen.

Um die Auswahl des POl zu vereinfachen, ist es aus der EP 3 252 432 A1 bekannt, den Nutzer in einem Fahrzeug zu beobachten und verschiedene Merkmale wie die Position oder eine Bewegung von Augen oder Kopf des Nutzers zu erfassen. Ebenso können für diesen Zweck Gesten des Nutzers ermittelt werden. So offenbart die DE 10 2010 017 931 A1 ein Informationssystem zur Bereitstellung von POl-Informationen, bei dem eine Benutzergeste zur Anzeige der Richtung des POI mittels einer Gestenerfassungsvorrichtung erfasst wird.

Informationen über den gewünschten POI werden auf der Grundlage der Richtung der Benutzergeste und dem Ort und der Ausrichtung des Fahrzeugs abgerufen und auf einer Anzeigevorrichtung angezeigt. Ähnliche Systeme mit einer Auswertung von Gesten zur POI-Identifizierung werden auch in der US 2017/0268897 A1 und der US 2018/0348886 A1 beschrieben, wobei es optional auch vorgesehen sein kann, das der Benutzer einen Sprachbefehl ausgeben kann, um zusätzliche Informationen über das zu identifizierende Objekt bereitzustellen und so die Auswahl des POI zu verbessern.

Ferner wird auch in der DE 10 2012 219 280 A1 ein Fahrerassistenzsystem beschrieben, bei dem Informationen zu einem in der Umgebung des Fahrzeugs befindlichen Objekt angezeigt werden, wenn der Fahrer durch seine Geste und seinen Blick dieses Objekt ausgewählt hat. Durch die Berücksichtigung von Blickrichtung und Zeigegeste ist es möglich, eine Richtungsachse zu bestimmen, welche vom Fahrer auf das gewünschte Objekt gerichtet ist.

Die US 2017/176207 A1 offenbart ein Fahrzeugnavigationssystem, welches auf einer Benutzeroberfläche Informationen in Bezug auf ein Objekt in der Umgebung des Fahrzeugs zur Verfügung stellt. Hierfür wird eine Geste oder ein Blick des Benutzers in Richtung des Objekts erfasst. Um sicherzustellen, dass nicht alle Blicke bzw. Bewegungen durch einen Benutzer als eine Benutzereingabe interpretiert werden, wird eine Bedienung einer Eingabetaste oder eines Schalters oder ein Sprachbefehl erfasst. Auf diese Weise kann überprüft werden, ob eine Geste oder ein Blick des Benutzers tatsächlich als eine hierfür vorgesehene Benutzereingabe gedacht war.

Ferner offenbart auch die DE 10 2017 215 161 A1 ein Verfahren zur Anwahl von einem Umgebungsobjekt im Umfeld eines Fahrzeugs. Hierfür wird eine Positionsangabe einer Hand oder eines Finger eines Fahrzeuginsassen und eine Positionsangabe der Augen des Fahrzeuginsassen ermittelt, wenn durch diesen eine Zeigegeste in Richtung des Umfelds des Fahrzeugs ausgeführt wird. Hieraus wird eine Raumrichtung relativ zum Fahrzeug ermittelt und ein Umgebungsobjekt in der ermittelten Raumrichtung angewählt. Zu dem angewählten Umgebungsobjekt werden in geeigneter Weise Informationen bereit gestellt.

Schließlich beschreibt die US 2014/164928 A1 ein mobiles Endgerät, bei welchem die Bedienung unter Verwendung der Augen und Gesten des Benutzers erleichtert und Eingaben durch eine Berührung des Benutzers minimiert werden. Hierfür ist das mobile Endgerät in der Lage, ein von einem Benutzer beobachtetes Objekt durch Verfolgung der Pupille des Benutzers zu identifizieren und eine zugeordnete Funktion durch eine Spracheingabe oder eine per Kamera erfasste Geste auszuführen.

Es ist eine Aufgabe der Erfindung, ein verbessertes Verfahren und eine verbesserte Vorrichtung zur Interaktion mit einem Umgebungsobjekt im Umfeld eines Fahrzeugs zur Verfügung zu stellen.

Diese Aufgabe wird durch ein Verfahren mit den Merkmalen des Anspruchs 1, sowie durch eine entsprechende Vorrichtung gemäß Anspruch 4 gelöst. Bevorzugte Ausgestaltungen der Erfindung sind Gegenstand der abhängigen Ansprüche.

Bei dem erfindungsgemäßen Verfahren zur Interaktion mit einem Umgebungsobjekt im Umfeld eines Fahrzeugs wird eine Zeigegeste eines in dem Fahrzeug befindlichen Nutzers in Richtung eines Umgebungsobjekts sensorisch erfasst. Aus der erfassten Zeigegeste wird das Umgebungsobjekt ermittelt. Eine Bestätigung wird an den Nutzer ausgegeben, dass das Umgebungsobjekt erkannt worden ist. Eine Spracheingabe des Nutzers wird erfasst. Mittels einer automatischen Spracherkennung und Interpretation der Spracheingabe wird ein das erkannte Umgebungsobjekt betreffender Sprachbefehl ermittelt. Der ermittelte Sprachbefehl wird ausgeführt, indem eine Information zu dem erkannten Umgebungsobjekt an den Nutzer ausgegeben und/oder eine mit dem erkannten Umgebungsobjekt in Zusammenhang stehende Fahrzeugfunktion ausgeführt wird.

Das erfindungsgemäße Verfahren stellt eine optimierte Möglichkeit für den Fahrer, aber auch andere Fahrzeugnutzer, dar um Umgehungsobjekte im Fahrzeugumfeld anzuwählen und mit diesen zu interagieren. Diese kann durch die Trennung der Identifizierung des Umgebungsobjekts mittels Gestenerkennung einerseits und die Interaktion mit dem Umgebungsobjekt mittels Spracherkennung andererseits auf eine besonders einfache, schnelle und intuitive Weise bei gleichzeitig möglichst geringer Ablenkung vom Fahrgeschehen erfolgen. Insbesondere für den Fahrer, der zur sicheren Führung des Fahrzeugs permanent das Fahrzeugumfeld betrachten muss, ermöglicht dieses eine Anwahl eines Umgehungsobjektes sowie eine gewünschte von einer Vielzahl möglicher Interaktionen für das ausgewählte Umgehungsobjekt auszuführen ohne hierfür den Blick von der Fahrbahn zu nehmen. Hierbei ist es nicht notwendig, dass der Fahrzeugnutzer die Sprachbedienung zunächst durch ein Aktivierungswort (englisch: "wake-up word") einschalten muss, da die Spracherkennung nach der gestengesteuerten Selektierung des Umgebungsobjekts automatisch gestartet werden kann. Die Interaktion wird dadurch schneller und kürzer.

Vorteilhafterweise wird die Information visuell und/oder akustisch durch eine Sprachausgabe ausgegeben.

Weiterhin ist es von Vorteil, wenn eine Übersicht über die verfügbaren Sprachbefehle an den Nutzer ausgegeben wird.

Gemäß einer Ausführungsform der Erfindung wird hierbei eine Ausrichtung eines Fingers des Nutzers und daraus eine Raumrichtung relativ zum Fahrzeug in Richtung des Umgebungsobjekts ermittelt und das Umgebungsobjekt in der ermittelten Raumrichtung angewählt.

So kann vorzugsweise die Position und Orientierung des Fahrzeugs ermittelt, aus der ermittelten Position und Orientierung des Fahrzeugs und der ermittelten Raumrichtung eine Positionsangabe des Umgebungsobjekts ermittelt und mittels der Positionsangabe des Umgebungsobjekts das Umgebungsobjekt in digitalen Kartendaten erkannt werden.

Ebenso kann vorzugsweise das Umgebungsobjekt optisch erfasst und durch eine Bildanalyse erkannt werden.

Entsprechend umfasst eine erfindungsgemäße Vorrichtung zur Interaktion mit einem Umgebungsobjekt im Umfeld eines Fahrzeugs,
- eine Gestenerfassungseinheit, welche eine Zeigegeste eines in dem Fahrzeug befindlichen Nutzers in Richtung eines Umgebungsobjekts erfasst;
- eine Eingabeeinheit zum Erfassen der Spracheingabe des Nutzers;
- eine Sprachverarbeitungseinheit, die mittels einer automatischen Spracherkennung und Interpretation der erfassten Spracheingabe einen das Umgebungsobjekt betreffenden Sprachbefehl ermittelt; und
- eine Auswerte- und Steuereinheit, der von der Gestenerfassungseinheit Daten über die erfasste Zeigegeste und von der Sprachverarbeitungseinheit der ermittelte Sprachbefehl zugeführt werden, und die aus den zugeführten Daten über die erfasste Zeigegeste das Umgebungsobjekt ermittelt und den ermittelten Sprachbefehl ausführt, indem eine Information zu dem erkannten Umgebungsobjekt an den Nutzer ausgegeben und/oder eine mit dem erkannten Umgebungsobjekt in Zusammenhang stehende Fahrzeugfunktion ausgeführt wird; und
- eine Ausgabeeinheit, mittels der an den Nutzer eine Bestätigung, dass das Umgebungsobjekt erkannt worden ist, und/oder die Information zu dem erkannten Umgebungsobjekt ausgebbar ist.

Gemäß einer Ausführungsform der Erfindung umfasst hierbei
- die Gestenerfassungseinheit einen Bild-, Radar- und/oder Ultraschallsensor; und/oder
- die Eingabeeinheit mindestens ein Mikrofon; und/oder
- die Ausgabeeinheit ein Display und/oder einen oder mehrere Lautsprecher.

Gemäß einer weiteren Ausführungsform der Erfindung ist eine Telekommunikationseinheit und/oder eine Navigationseinheit vorgesehen, mit der eine mit dem erkannten Umgebungsobjekt in Zusammenhang stehende Fahrzeugfunktion ausgeführt wird.

Gemäß einer weiteren Ausführungsform der Erfindung ist eine Posenbestimmungseinheit zur Ermittlung der Position und Orientierung des Fahrzeugs und/oder ein Kamerasensor zur optischen Erfassung des Umgebungsobjekts sowie eine Bildanalyseeinheit zur Erkennung des Umgebungsobjekts vorgesehen.

Die Erfindung betrifft auch ein Kraftfahrzeug, in dem das erfindungsgemäße Verfahren oder die erfindungsgemäße Vorrichtung eingesetzt wird.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ablaufdiagramm eines erfindungsgemäßen Verfahrens zur Interaktion mit einem Umgebungsobjekt im Umfeld eines Fahrzeugs;
- Fig. 2: zeigt schematisch einen Fahrzeugnutzer mit einem Blockschaltbild einer erfindungsgemäßen Vorrichtung;
- Fig. 3: zeigt eine grafische Benutzerschnittstelle eines Infotainmentsystems mit einem Popupfenster zur Informationsabfrage über ein Umgebungsobjekt im Fahrzeugumfeld;
- Fig. 4: zeigt die grafische Benutzerschnittstelle mit einem Popupfenster mit Informationen zu einem angewählten Umgebungsobjekt; und
- Fig. 5: zeigt drei mögliche Zusatzoptionen zu dem Popupfenster mit Informationen zu dem angewählten Umgebungsobjekt.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

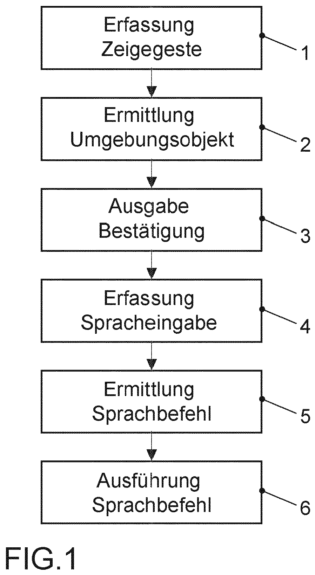

Figur 1 zeigt schematisch ein Ausführungsbeispiel für das erfindungsgemäße Verfahren zur Interaktion mit Umgebungsobjekten im Umfeld eines Fahrzeugs. Die Umgebungsobjekte können hierbei POI oder auch beliebige andere statische Objekte im Umfeld des Fahrzeugs sein, beispielsweise Verkehrsschilder, Straßenschilder oder Gebäude. Es ist aber auch eine Anwendung für bewegte Umgebungsobjekt denkbar. So kann durch ein Zeigen auf andere Verkehrsteilnehmer, wie insbesondere andere fahrende Kraftfahrzeuge, eine Kontaktaufnahme initiiert werden.

Gemäß einem ersten Verfahrensschritt 1 wird hierbei ein Finger, insbesondere Zeigefinger, des Fahrzeugnutzers sensorisch erfasst und ausgewertet, ob dieser eine Zeigegeste im Raum in Richtung des Umfelds des Fahrzeugs ausführt.

Ist dieses der Fall, so wird in einem Verfahrensschritt 2 die Ausrichtung des Fingers und daraus eine Raumrichtung relativ zum Fahrzeug in Richtung des Umgebungsobjekts ermittelt. In Verbindung mit einer Bestimmung der aktuellen Fahrzeugposition und der aktuellen Orientierung des Fahrzeugs kann die Position des Umgebungsobjektes aus digitalen Kartendaten ermittelt werden. Insbesondere bei Umgebungsobjekten, die nicht in diesen digitalen Kartendaten verzeichnet sind, wie beispielsweise Verkehrszeichen, kann stattdessen das Umgebungsobjekt optisch erfasst und durch eine Bildanalyse erkannt werden. Ebenso können die Positionsbestimmung mit der optischen Erfassung und Bildanalyse kombiniert werden, um die Erkennungsrate zu optimieren.

Ist auf diese Weise ein Umgebungsobjekt angewählt worden, so wird dieses dem Nutzer in einem Verfahrensschritt 3 optisch oder akustisch bestätigt. Damit wird dem Nutzer vermittelt, dass basierend auf seiner Zeigegeste die Anwahl des Umgebungsobjekts erfolgreich war und er mit einem Sprachbefehl Informationen zu diesem Umgebungsobjekt abfragen kann oder auch eine mit diesem Umgebungsobjekt in Zusammenhang stehende Fahrzeugfunktion ausführen kann. Da nun bekannt ist, um welches Umgebungsobjekt es sich handelt, ist über den Bezug zu diesem Umgebungsobjekt eine einfache gesprochene Abfrage wie "Was ist das?" ohne weiteres möglich. Hierbei kann optional zunächst eine Wiedergabe der möglichen Sprachbefehle, beispielsweise durch eine Anzeige, erfolgen, um dem Nutzer einen Überblick über die Bedienmöglichkeiten zu geben. Diese Bedienhilfe erleichtert dem Nutzer den Gebrauch, da dem Nutzer noch bevor er etwas gesagt hat, mitgeteilt wird, welche Bedienoptionen bei dem erkannten Umgebungsobjekt zur Verfügung stehen und welche Bedienoptionen bei dem erkannten Umgebungsobjekt dagegen nicht unterstützt werden.

In Verfahrensschritt 4 wird dann eine Spracheingabe des Nutzers mittels eines oder mehrerer in dem Fahrzeug integrierter Mikrofone erfasst. Das so erfasste Audiosignal wird dann einer Vorverarbeitung zugeführt, in der das analoge Audiosignal zunächst digitalisiert wird. Durch eine anschließende Filterung werden Umgebungsgeräusche wie beispielsweise Motorengeräusche möglichst gut unterdrückt. Nach einer Transformation des gefilterten Signals in den Frequenzbereich werden dann Merkmalsvektoren mit aus dem transformierten Sprachsignal erzeugten Merkmalen generiert.

Anschließend findet in Verfahrensschritt 5 die tatsächliche Erkennung des Sprachbefehls mit Hilfe akustischer Modelle, Wörterbücher und Sprachmodelle statt. Hierfür kann auf vordefinierte Vokabulare und vordefinierte Sprachbefehle zurückgegriffen werden, die in dem Fahrzeug vorinstalliert sind. Ebenso ist aber auch eine natürlich-sprachliche Bedienung möglich, wobei dann ggfs. das Sprachsignal des Nutzers mittels Datenfunkübertragung zu einer Erkennungssoftware auf einem hierfür vorgesehenen Server in der Cloud übertragen wird und der erkannte Sprachbefehl an das Fahrzeug zurückgesendet wird.

In Verfahrensschritt 6 wird dann der ermittelte Sprachbefehl ausgeführt. So können für das angewählte Umgehungsobjekt Informationen abgefragt und an den Nutzer ausgegeben werden. Die Informationen können hierbei bereits im Fahrzeug, beispielsweise im Rahmen des digitalen Kartenmaterials eines Navigationssystems vorliegen, oder aber auch über ein Kommunikationsnetzwerk, insbesondere das Internet, von externen Datenbanken abgefragt werden. Ebenso kann eine mit dem erkannten Umgebungsobjekt in Zusammenhang stehende Fahrzeugfunktion ausgeführt werden, so kann beispielsweise die Navigationsroute angepasst werden oder ein telefonischer Kontakt zu dem erkannten Umgebungsobjekt hergestellt werden.

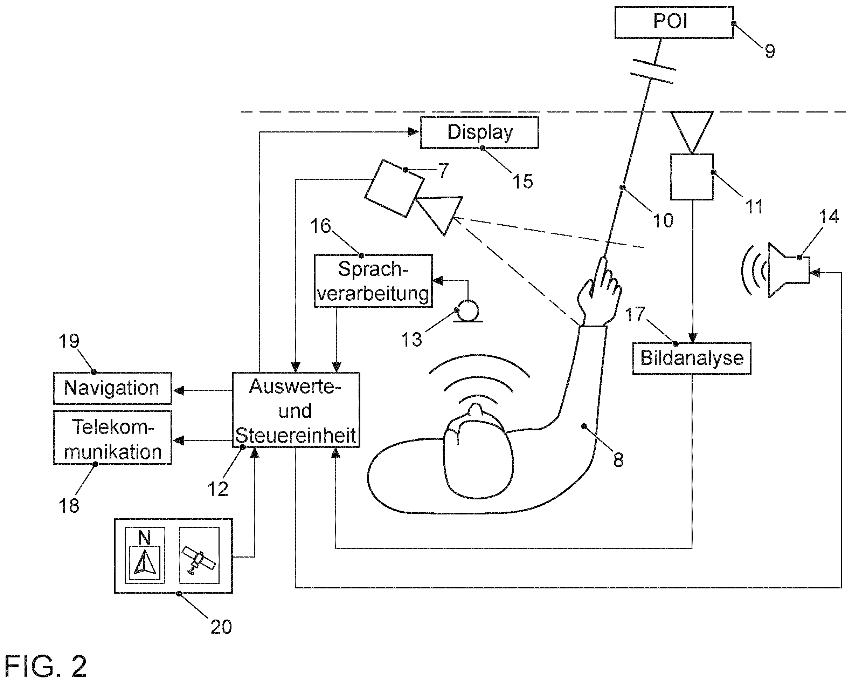

Figur 2 zeigt schematisch einen Fahrzeugnutzer 8 mit einem Blockschaltbild einer Ausführungsform einer erfindungsgemäßen Vorrichtung. Bei dem Fahrzeugnutzer kann es sich hierbei insbesondere um den Fahrer des Fahrzeugs, aber auch um den Beifahrer oder einen anderen Fahrzeugnutzer handeln.

Um mit einem Umgebungsobjekt 9 zu interagieren, zeigt der Fahrzeugnutzer in dem dargestellten Beispiel mit dem Zeigefinger seiner rechten Hand auf dieses Umgebungsobjekt. Das Umgebungsobjekt befindet sich hierbei, anders als der Fahrzeuginsasse und die für die Erfindung verwendeten und im folgenden beschriebenen Einheiten und Bauteile des Fahrzeugs, außerhalb des Fahrzeuges in der Fahrzeugumgebung, symbolisiert durch eine gestrichelte Linie, die das Fahrzeug und die Fahrzeugumgebung voneinander trennt. Die Raumrichtung 10 in Richtung des Umgebungsobjekts ist hierbei unterbrochen dargestellt, da sich das Umgebungsobjekt in einiger Entfernung von dem Fahrzeugnutzer befindet.

Der Zeigefinger des Fahrzeugnutzers wird mit einer im Innenraum des Fahrzeugs angeordneten 3D-Kamera 7 erfasst. Die 3D-Kamera ist hierbei so im Innenraum verbaut, dass der Finger des Nutzers während einer Zeigegeste gut erfasst werden kann, beispielsweise in Bereichen des Armaturenbretts, der Mittelkonsole, des Rückspiegels oder des Dachhimmels. Vorzugsweise wird die 3D-Kamera im nahen Infrarotbereich betrieben, da dann auch bei Dunkelheit durch eine nicht dargestellte Infrarotbeleuchtung der Betrieb gewährleistet ist, ohne dass hierdurch der Fahrzeuginsasse gestört oder geblendet wird. Statt mit einer 3D-Kamera kann die Position der Fingerspitze aber auch mit anderen geeigneten Sensoren erfasst werden, die eine ausreichende Genauigkeit aufweisen, wie beispielsweise Radarsensoren.

Die Bildsignale der 3D-Kamera 7 werden in dem dargestellten Beispiel zur Analyse einer Auswerte- und Steuereinheit 12 zugeführt, dieses kann aber ebenso durch eine separate oder auch eine in der 3D-Kamera integrierte Analyseeinheit erfolgen. Die Auswerte- und Steuereinheit 12 kann hierbei einen Mikroprozessor, einen internen elektronischen Speicher und eine oder mehrere elektrische Schnittstellen aufweisen.

Die Auswerte- und Steuereinheit 12 bestimmt durch eine Bildverarbeitung der Bildsignale, ob der Fahrzeuginsasse eine Zeigegeste im Raum in Richtung des Umfelds des Fahrzeugs ausführt. Hierfür können aus den Bildsignalen Merkmale ermittelt werden, die dann mit entsprechenden, abgespeicherten Mustern von Händen bzw. Fingern, die eine Zeigegeste ausführen, verglichen werden. Wenn die Auswerte- und Steuereinheit 12 ermittelt, dass eine Zeigegeste in Richtung des Umfelds des Fahrzeugs ausgeführt wird, bestimmt sie aus dieser eine Raumrichtung relativ zum Fahrzeugnutzer bzw. Fahrzeug. Daraufhin ermittelt die Auswerte- und Steuereinheit 12 ob sich ein Umgebungsobjekt in der ermittelten Raumrichtung befindet.

Hierfür ist eine Posenbestimmungseinheit 20 vorgesehen, welche die aktuelle Fahrzeugposition aus GPS-Daten eines fahrzeuginternen GPS-Sensors und die aktuelle Orientierung des Fahrzeugs mittels eines elektronischen Kompass ermittelt und eine Information hierüber der Auswerte- und Steuereinheit 12 zuführt. Die Auswerte- und Steuereinheit 12 ermittelt dann mittels dieser Information in Verbindung mit der aus der Zeigegeste bestimmten Raumrichtung und beispielsweise in der Navigationseinheit 19 vorliegenden digitalen Kartendaten die Position des Umgebungsobjekts und hieraus die Identität des Umgebungsobjekts.

Stattdessen oder zusätzlich kann das Umfeld des Fahrzeugs durch einen Kamerasensor 11 erfasst werden und das erfasste Bild einer Bildanalyseeinheit 17 zugeführt werden. Das Ergebnis der Bildanalyse wird dann wiederum der Auswerte- und Steuereinheit 12 zugeführt. Auf diese kann durch geeignete Algorithmen zur Bildverarbeitung und Bilderkennung auch eine semantische Erkennung bzw. Auswertung des Umgebungsobjekts und ggfs. auf dem Umgebungsobjekt befindlicher Bild- und/oder Textinformationen erfolgen. Zur weiteren Verbesserung der Erkennung, beispielsweise bei ungünstigen Lichtverhältnissen, können außerdem Radar- oder Ultraschallsensoren verwendet werden.

Wenn sich ein Umgebungsobjekt in der ermittelten Raumrichtung befindet, so kann dieses unmittelbar angewählt werden. Es kann aber auch vorgesehen werden, dass diese Anwahl nur erfolgt, wenn der Fahrzeugnutzer mindestens für einen vordefinierten Zeitraum auf dieses Umgebungsobjekt zeigt oder die Anwahl durch eine mittels des Fingers angedeuteten Klick- oder Doppelklick-Bewegung vornimmt.

Weiterhin ist ein Mikrofon 13 zur Erfassung einer Spracheingabe des Nutzers vorgesehen. Das von dem Mikrofon 13 erfasste Audiosignal wird einer Sprachverarbeitungseinheit 16 zugeführt, die aus der Spracheingabe einen Sprachbefehl ermittelt und an die Auswerte- und Steuereinheit 12 zur Ausführung ausgibt.

Für ein angewähltes Umgebungsobjekt können dann von einer Datenbank, die im Fahrzeug als Teil des Navigationssystems vorliegen kann oder aber auch bei einem Serviceunternehmen online abgefragt werden kann, Informationen abgefragt werden. Die Informationen können dann durch die Auswerte- und Steuereinheit 12 über eine Ausgabeeinheit oder mehrere Ausgabeeinheiten an den Fahrzeugnutzer ausgegeben werden. So können die abgefragten Informationen über eine optische Anzeige auf einem Display 15 ausgegeben werden. Dieses kann beispielsweise auf dem Display eines im Fahrzeug integrierten Infotainmentsystems oder auch durch eine Einblendung mittels eines HUD-Displays erfolgen. Stattdessen oder zusätzlich kann eine akustische Ausgabe über Lautsprecher 14 im Fahrzeug erfolgen. Anstatt einer solchen Informationswiedergabe kann die Auswerte- und Steuereinheit 12 aber auch eine Navigationseinheit 19 zur Anpassung der Navigationsroute oder eine Telekommunikationseinheit 18 zur Herstellung eines telefonischen Kontakts zu dem erkannten Umgebungsobjekt ansteuern.

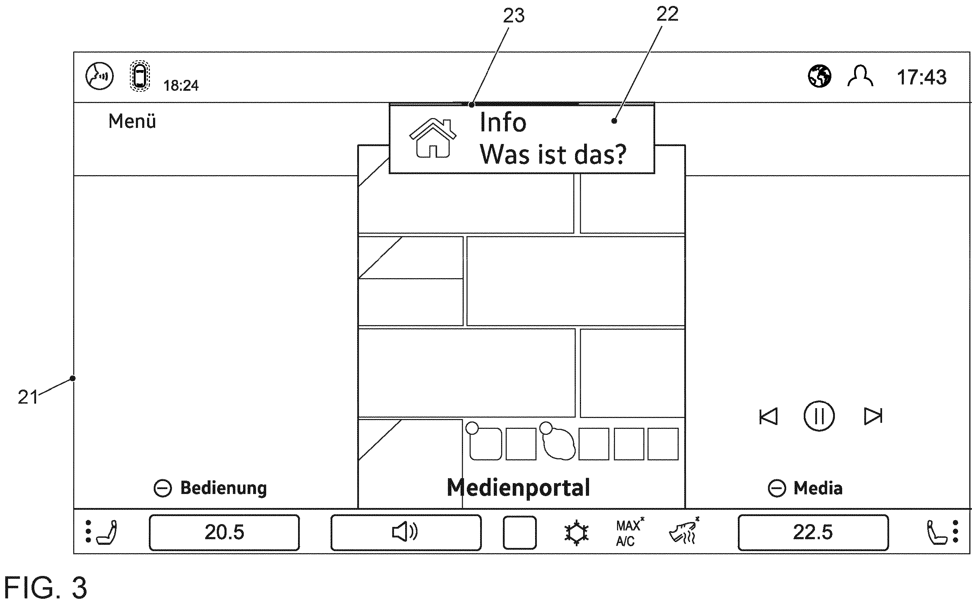

In den Figuren 3 bis 5 werden Beispiele für Popupfenster einer grafischen Benutzerschnittstelle 21 eines Infotainmentsystems zur Interaktion mit dem Fahrzeugumfeld dargestellt, die zu verschiedenen Zeitpunkten nach der gestengesteuerten Erkennung eines POI an den Fahrzeugnutzer ausgegeben werden können.

Hat der Fahrzeugnutzer einen POI in Form eines aktuell von dem Fahrzeug passierten Gebäudes per Geste ausgewählt um hierüber Informationen zu erhalten, so kann er diese anfordern indem er beispielsweise "was ist das?" sagt. Zur Bestätigung, dass dieser Sprachbefehl zur Informationswiedergabe erfasst und korrekt erkannt wurde, kann der Sprachbefehl in dem in Figur 3 gezeigten Popupfenster 22 wiedergegeben werden. Vorzugsweise ist hierbei eine natürlich-sprachliche Bedienung vorgesehen, so dass der Nutzer nicht auf bestimmte Wörter oder Anfragen beschränkt ist, sondern beliebige Sprachbefehle äußern kann. So kann der Nutzer die gewünschte Information über das Gebäude ebenso beispielsweise durch "was ist das für ein Gebäude?", "erzähl mir etwas darüber", "Info", "Infos", "Informationen", "Details" erfragen. Ist eine natürlich-sprachliche Bedienung nicht möglich, so kann optional, und hier nicht dargestellt, auch zunächst eine Anzeige erfolgen, in der die für den erkannten POI möglichen Sprachbefehle aufgeführt werden. Zusätzlich kann eine Lichtleiste 23 eingeblendet werden, die den Fortschritt der Spracherkennung oder die verschiedenen Aktivitäten der Sprachbedienung wie "Zuhören" oder "Verarbeiten" an den Nutzer zurückmeldet.

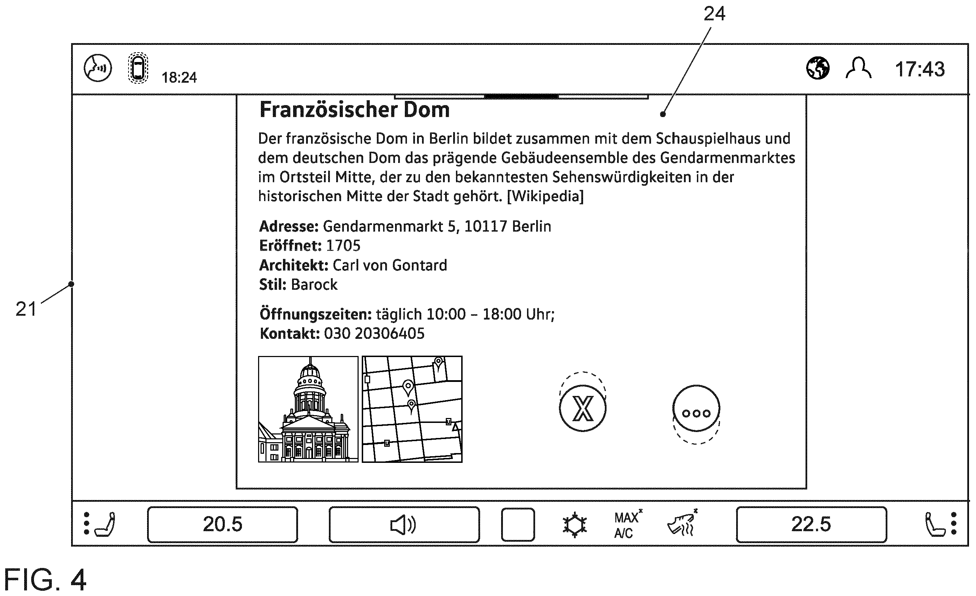

Nach der Verarbeitung des Sprachbefehls, in diesem Fall der Anfrage von Informationen über das Gebäude, werden diese in einem in Figur 4 gezeigten Popupfenster 24 mit Informationen über Name und Hintergrund des angewählten historischen Gebäudes angezeigt. Ebenso kann beispielsweise auch ein sich in einem Gebäude befindliches Restaurant angewählt werden um Informationen über die Art der angebotenen Speisen, Öffnungszeiten oder auch Bewertungen anzuzeigen.

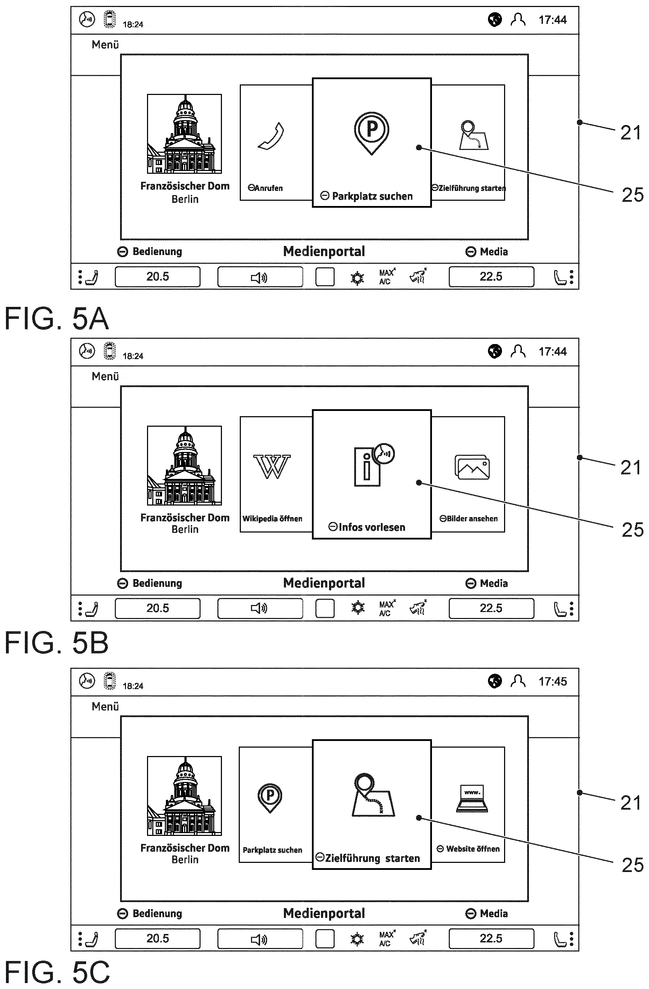

Falls erwünscht, kann der Nutzer dann per Geste Zusatzoptionen 25 zu diesem Popupfenster öffnen und die erhaltenen Informationen dadurch weiternutzen. Es sind hier eine Vielzahl von Zusatzoptionen möglich, von denen drei in Figur 5 dargestellt sind. So kann gemäß Figur 5A ein Parkplatz in der Nähe des POI gesucht werden und dann in die Zielführung übernommen werden. Ebenso kann, wie in Figur 5B dargestellt, per Sprachbefehl das Vorlesen der ermittelten Informationen angefordert werden, um so insbesondere dem Fahrer des Fahrzeugs zu ermöglichen, auch detaillierte Informationen zur Kenntnis zu nehmen ohne dabei seinen Blick von dem Straßenverkehr nehmen zu müssen. Schließlich kann, wie in Figur 5C dargestellt, das Navigationssystem aufgefordert werden, eine Zielführung zu dem POI zu starten, um den POI anzusteuern.

Einige weitere, nicht dargestellte Zusatzoptionen sind beispielsweise die Möglichkeit, automatisch eine mit einem POI oder auch einem Fremdfahrzeug verknüpfte Telefonnummer anzurufen, eine mit dem POI verknüpfte Webseite zu öffnen oder einen POI als Favorit zu speichern. Ebenso kann durch Zeigen auf Verkehrsschilder deren genaue Bedeutung gemäß der Straßenverkehrsordnung oder durch Zeigen auf ein Ortsschild eine Information zu der darauf genannten Stadt abgefragt werden, oder durch Zeigen auf eine in Sicht befindliche Straße die Navigationsroute angepasst werden.

Hierbei ist es nicht erforderlich, dass zunächst eine allgemeine Informationsanfrage und dann erst eine der erwähnten Zusatzoptionen angefragt wird. Vielmehr ist auch denkbar, dass der Nutzer bereits im ersten Schritt anstelle einer Informationsanfrage die oben bei den Zusatzoptionen genannten Funktionen anfragt, also z.B. auf einen POI zeigt und sagt "bitte rufe dort an" oder "bitte suche mir einen Parkplatz in der Nähe".

Die abgefragten Informationen können nach der Ausgabe an den Fahrzeugnutzer gelöscht werden, aber ebenso abgespeichert werden um so dem Fahrzeugnutzer auch später noch zur Verfügung zu stehen.

Die Erfindung kann in beliebigen Bereichen der Fahrzeugtechnik eingesetzt werden.

### Bezugszeichenliste

- 1: Erfassung Zeigegeste
- 2: Ermittlung Umgebungsobjekt
- 3: Ausgabe Bestätigung
- 4: Erfassung Spracheingabe
- 5: Ermittlung Sprachbefehl
- 6: Ausführung Sprachbefehl
- 7: Gestenerfassungseinheit
- 8: Fahrzeuginsasse
- 9: Umgebungsobjekt
- 10: Raumrichtung in Richtung des Umgebungsobjekts
- 11: Kamera zur Erfassung des Umgebungsobjekts
- 12: Auswerte- und Steuereinheit
- 13: Mikrophon
- 14: Lautsprecher
- 15: Display
- 16: Sprachverarbeitungseinheit
- 17: Bildanalyseeinheit
- 18: Telekommunikationseinheit
- 19: Navigationseinheit
- 20: Posenbestimmungseinheit
- 21: grafische Benutzerschnittstelle eines Infotainmentsystems
- 22: Popupfenster zur Informationsabfrage
- 23: Lichtleiste
- 24: Popupfenster mit Informationen zu Umgebungsobjekt
- 25: Popupfenster mit Zusatzoptionen

## Patentansprüche

1. Verfahren zur Interaktion mit einem Umgebungsobjekt im Umfeld eines Fahrzeugs, wobei sich das Umgebungsobjekt außerhalb des Fahrzeuges befindet, bei dem
- eine Zeigegeste eines in dem Fahrzeug befindlichen Nutzers in Richtung eines Umgebungsobjekts sensorisch erfasst (1) wird;
- aus der erfassten Zeigegeste das Umgebungsobjekt ermittelt (2) wird, indem
- eine Ausrichtung eines Fingers des Nutzers und daraus eine Raumrichtung relativ zum Fahrzeug in Richtung des Umgebungsobjekts ermittelt wird,
- die Position und Orientierung des Fahrzeugs ermittelt wird,
- aus der ermittelten Position und Orientierung des Fahrzeugs und der ermittelten Raumrichtung eine Positionsangabe des Umgebungsobjekts ermittelt wird, und
- mittels der Positionsangabe des Umgebungsobjekts das Umgebungsobjekt in digitalen Kartendaten erkannt wird;
- an den Nutzer eine Bestätigung, dass das Umgebungsobjekt erkannt worden ist ausgegeben (3) wird;
- eine Spracheingabe des Nutzers erfasst (4) wird;
- mittels einer automatischen Spracherkennung und Interpretation der Spracheingabe ein das erkannte Umgebungsobjekt betreffender Sprachbefehl ermittelt (5) wird;
- der ermittelte Sprachbefehl ausgeführt (6) wird;
**dadurch gekennzeichnet, dass**
- an den Nutzer eine Übersicht über die möglichen Sprachbefehle für die bei dem erkannten Umgebungsobjekt zur Verfügung stehenden Bedienoptionen ausgegeben (3) wird;
- der ermittelte Sprachbefehl ausgeführt (6) wird, wenn die dem ermittelten Sprachbefehl entsprechende Bedienoption bei dem erkannten Umgebungsobjekt zur Verfügung steht.

2. Verfahren nach Anspruch 1, wobei der ermittelte Sprachbefehl ausgeführt (6) wird, indem eine Information zu dem erkannten Umgebungsobjekt an den Nutzer ausgegeben wird.

3. Verfahren nach Anspruch 1 oder 2, wobei der ermittelte Sprachbefehl ausgeführt (6) wird, indem eine mit dem erkannten Umgebungsobjekt in Zusammenhang stehende Fahrzeugfunktion ausgeführt wird.

4. Verfahren nach einem der vorhergehenden Ansprüche, wobei die Information visuell über eine optische Anzeige auf einem Display (15) ausgegeben wird.

5. Verfahren nach einem der vorhergehenden Ansprüche, wobei die Information akustisch durch eine Sprachausgabe über einen Lautsprecher (14) ausgegeben wird.

6. Verfahren nach einem der vorhergehenden Ansprüche, wobei das Umfeld des Fahrzeugs durch einen Kamerasensor (11) erfasst wird und das Umgebungsobjekt in dem erfassten Umfeld durch eine Bildanalyse erkannt wird.

7. Verfahren nach Anspruch 6, wobei Umgebungsobjekte, die nicht in den digitalen Kartendaten verzeichnet sind, durch den Kamerasensor (11) erfasst und durch die Bildanalyse erkannt werden.

8. Verfahren nach Anspruch 6, wobei die auf der erfassten Zeigegeste beruhende Positionsbestimmung des Umgebungsobjekts mit der Erfassung durch den Kamerasensor (11) und der Bildanalyse des Umfelds kombiniert wird.

9. Verfahren nach Anspruch 6, wobei bei der Bildanalyse eine Erkennung von auf dem Umgebungsobjekt befindlichen Bildinformationen, Textinformationen oder einer Kombination von Bildinformationen und Textinformationen erfolgt.

10. Vorrichtung zur Interaktion mit einem Umgebungsobjekt im Umfeld eines Fahrzeugs, wobei sich das Umgebungsobjekt außerhalb des Fahrzeuges befindet, mit
- einer Gestenerfassungseinheit (7), welche eine Zeigegeste eines in dem Fahrzeug befindlichen Nutzers in Richtung eines Umgebungsobjekts erfasst;
- einer Eingabeeinheit (13) zum Erfassen der Spracheingabe des Nutzers;
- einer Sprachverarbeitungseinheit (16), die mittels einer automatischen Spracherkennung und Interpretation der erfassten Spracheingabe einen das Umgebungsobjekt betreffenden Sprachbefehl ermittelt; und
- einer Auswerte- und Steuereinheit (12), der von der Gestenerfassungseinheit Daten über die erfasste Zeigegeste und von der Sprachverarbeitungseinheit der ermittelte Sprachbefehl zugeführt werden, und die aus den zugeführten Daten über die erfasste Zeigegeste das Umgebungsobjekt ermittelt, indem
- eine Ausrichtung eines Fingers des Nutzers und daraus eine Raumrichtung relativ zum Fahrzeug in Richtung des Umgebungsobjekts ermittelt wird,
- die Position und Orientierung des Fahrzeugs ermittelt wird,
- aus der ermittelten Position und Orientierung des Fahrzeugs und der ermittelten Raumrichtung eine Positionsangabe des Umgebungsobjekts ermittelt wird, und
- mittels der Positionsangabe des Umgebungsobjekts das Umgebungsobjekt in digitalen Kartendaten erkannt wird,
und den ermittelten Sprachbefehl ausführt; und
- einer Ausgabeeinheit (14, 15), mittels der an den Nutzer eine Bestätigung, dass das Umgebungsobjekt erkannt worden ist, ausgebbar ist;
**dadurch gekennzeichnet, dass**
- mittels der Ausgabeeinheit (14, 15), an den Nutzer eine Übersicht über die möglichen Sprachbefehle für die bei dem erkannten Umgebungsobjekt zur Verfügung stehenden Bedienoptionen ausgebbar ist; und
- mittels der Auswerte- und Steuereinheit (12), der ermittelte Sprachbefehl ausgeführt wird, wenn die dem ermittelten Sprachbefehl entsprechende Bedienoption bei dem erkannten Umgebungsobjekt zur Verfügung steht.

11. Vorrichtung nach Anspruch 10, wobei
- die Gestenerfassungseinheit (7) einen oder mehrere der folgenden Sensoren umfasst:
einen Bildsensor, einen Radarsensor, einen Ultraschallsensor;
- die Eingabeeinheit (13) mindestens ein Mikrofon umfasst; und
- die Ausgabeeinheit einen oder mehrere der folgenden Einheiten umfasst: ein Display (15), einen oder mehrere Lautsprecher (14).

12. Vorrichtung nach Anspruch 7 oder 8, wobei eine oder mehrere der folgenden Einheiten vorgesehen sind: eine Telekommunikationseinheit (18), eine Navigationseinheit (19), mit der eine mit dem erkannten Umgebungsobjekt in Zusammenhang stehende Fahrzeugfunktion ausgeführt wird, eine Posenbestimmungseinheit (20) zur Ermittlung der Position und Orientierung des Fahrzeugs, ein Kamerasensor (11) zur optischen Erfassung des Umgebungsobjekts, eine Bildanalyseeinheit (17) zur Erkennung des Umgebungsobjekts.

13. Kraftfahrzeug, das eine Vorrichtung gemäß einem der Ansprüche 10 bis 12 aufweist.

## Claims

1. Method for interacting with an environment object in the environment of a vehicle, the environment object being located outside the vehicle, in which method
- a pointing gesture of a user in the vehicle in the direction of an environment object is detected (1) by sensors;
- the environment object is determined (2) from the detected pointing gesture by virtue of
- an orientation of a finger of the user being determined and, from said orientation, a spatial direction relative to the vehicle in the direction of the environment object being determined,
- the position and orientation of the vehicle being determined,
- a position indication of the environment object being determined from the determined position and orientation of the vehicle and from the determined spatial direction, and
- the environment object being identified in digital map data by means of the position indication of the environment object;
- a confirmation is output (3) to the user that the environment object has been identified;
- a voice input from the user is detected (4);
- a voice command relating to the identified environment object is determined (5) by means of automatic voice recognition and interpretation of the voice input;
- the determined voice command is executed (6);
**characterized in that**
- an overview of the possible voice commands for the operating options available for the identified environment object is output (3) to the user;
- the determined voice command is executed (6) if the operating option corresponding to the determined voice command is available for the identified environment object.

2. Method according to claim 1, wherein the determined voice command is executed (6) by outputting a piece of information about the identified environment object to the user.

3. Method according to claim 1 or claim 2, wherein the determined voice command is executed (6) by a vehicle function associated with the identified environment object being executed.

4. Method according to any of the preceding claims, wherein the piece of information is output visually via an optical indicator on a display (15).

5. Method according to any of the preceding claims, wherein the piece of information is output acoustically by a voice output via a loudspeaker (14).

6. Method according to any of the preceding claims, wherein the environment of the vehicle is detected by a camera sensor (11), and the environment object in the detected environment is identified by image analysis.

7. Method according to claim 6, wherein environment objects which are not recorded in the digital map data are detected by the camera sensor (11) and identified by the image analysis.

8. Method according to claim 6, wherein the position determination of the environment object, based on the detected pointing gesture, is combined with the detection by the camera sensor (11) and the image analysis of the environment.

9. Method according to claim 6, wherein the image analysis involves identification of image information, text information or a combination of image information and text information located on the environment object.

10. Device for interacting with an environment object in the environment of a vehicle, the environment object being located outside the vehicle, comprising
- a gesture detection unit (7) which detects a pointing gesture of a user in the vehicle in the direction of an environment object;
- an input unit (13) for detecting the voice input from the user;
- a voice processing unit (16) which determines, by means of automatic voice recognition and interpretation of the detected voice input, a voice command relating to the environment object; and
- an evaluation and control unit (12) to which data regarding the detected pointing gesture are supplied from the gesture detection unit and the determined voice command is supplied from the voice processing unit, and which determines the environment object from the supplied data regarding the detected pointing gesture by virtue of
- an orientation of a finger of the user being determined and, from said orientation, a spatial direction relative to the vehicle in the direction of the environment object being determined,
- the position and orientation of the vehicle being determined,
- a position indication of the environment object being determined from the determined position and orientation of the vehicle and from the determined spatial direction, and
- the environment object being identified in digital map data by means of the position indication of the environment object,
and the determined voice command being executed; and
- an output unit (14, 15) by means of which a confirmation that the environment object has been identified can be output to the user;
**characterized in that**
- an overview of the possible voice commands for the operating options available for the identified environment object can be output to the user by means of the output unit (14, 15); and
- the determined voice command is executed by means of the evaluation and control unit (12) if the operating option corresponding to the determined voice command is available for the identified environment object.

11. Device according to claim 10, wherein
- the gesture detection unit (7) comprises one or more of the following sensors: an image sensor, a radar sensor, an ultrasonic sensor;
- the input unit (13) comprises at least one microphone; and
- the output unit comprises one or more of the following units: a display (15), one or more loudspeakers (14).

12. Device according to claim 7 or claim 8, wherein one or more of the following units are provided: a telecommunications unit (18), a navigation unit (19), by means of which a vehicle function associated with the identified environment object is executed, a pose identification unit (20) for determining the position and orientation of the vehicle, a camera sensor (11) for optically detecting the environment object, an image analysis unit (17) for identifying the environment object.

13. Motor vehicle comprising a device according to any of claims 10 to 12.

## Revendications

1. Procédé d'interaction avec un objet environnant dans l'environnement d'un véhicule, dans lequel l'objet environnant se trouve à l'extérieur du véhicule, dans lequel
- un geste de pointage d'un utilisateur se trouvant dans le véhicule en direction d'un objet environnant est détecté (1) par un capteur ;
- l'objet environnant est déterminé (2) à partir du geste de pointage détecté en ce que
- une orientation d'un doigt de l'utilisateur et, à partir de là, une direction spatiale par rapport au véhicule en direction de l'objet environnant est déterminée,
- la position et l'orientation du véhicule sont déterminées,
- une indication de position de l'objet environnant est déterminée à partir de la position et de l'orientation déterminées du véhicule et de la direction spatiale déterminée, et
- par le biais de l'indication de position de l'objet environnant, l'objet environnant est reconnu dans des données cartographiques numériques ;
- une confirmation de la reconnaissance de l'objet d'environnement est envoyée (3) à l'utilisateur ;
- une entrée vocale de l'utilisateur est détectée (4) ;
- une instruction vocale concernant l'objet environnant reconnu est déterminée (5) par le biais d'une reconnaissance vocale et d'une interprétation de l'entrée vocale automatiques ;
- l'instruction vocale déterminée est exécutée (6) ;
**caractérisé en ce que**
- un aperçu des instructions vocales possibles pour les options de commande disponibles pour l'objet environnant reconnu est envoyé (3) à l'utilisateur ;
- l'instruction vocale déterminée est exécutée (6) si l'option de commande correspondant à l'instruction vocale déterminée est disponible pour l'objet environnant reconnu.

2. Procédé selon la revendication 1, dans lequel l'instruction vocale déterminée est exécutée (6) en envoyant à l'utilisateur une information concernant l'objet environnant reconnu.

3. Procédé selon la revendication 1 ou 2, dans lequel l'instruction vocale déterminée est exécutée (6) en exécutant une fonction de véhicule associée à l'objet environnant reconnu.

4. Procédé selon l'une des revendications précédentes, dans lequel l'information est envoyée visuellement par l'intermédiaire d'un affichage optique sur un écran (15).

5. Procédé selon l'une des revendications précédentes, dans lequel l'information est envoyée de manière acoustique par une synthèse vocale par l'intermédiaire d'un haut-parleur (14).

6. Procédé selon l'une des revendications précédentes, dans lequel l'environnement du véhicule est détecté par un capteur de caméra (11) et l'objet environnant dans l'environnement détecté est reconnu par une analyse d'images.

7. Procédé selon la revendication 6, dans lequel des objets environnants, qui ne sont pas répertoriés dans les données cartographiques numériques, sont détectés par le capteur de caméra (11) et reconnus par l'analyse d'images.

8. Procédé selon la revendication 6, dans lequel la détermination de position de l'objet environnant basée sur le geste de pointage détecté est combinée avec la détection par le capteur de caméra (11) et l'analyse d'images de l'environnement.

9. Procédé selon la revendication 6, dans lequel, lors de l'analyse d'images, une reconnaissance d'informations d'image, d'informations de texte ou d'une combinaison d'informations d'image et d'informations de texte se trouvant sur l'objet environnant est effectuée.

10. Dispositif d'interaction avec un objet environnant dans l'environnement d'un véhicule, dans lequel l'objet environnant se trouve à l'extérieur du véhicule, comportant
- une unité de détection de geste (7) qui détecte un geste de pointage d'un utilisateur se trouvant dans le véhicule en direction d'un objet environnant ;
- une unité d'entrée (13) pour détecter l'entrée vocale de l'utilisateur ;
- une unité de traitement vocal (16) qui détermine une instruction vocale concernant l'objet environnant par le biais d'une reconnaissance vocale et d'une interprétation de l'entrée vocale détectée automatiques ; et
- une unité d'évaluation et de commande (12) à laquelle sont amenées, par l'unité de détection de geste, des données concernant le geste de pointage détecté et, par l'unité de traitement vocal, l'instruction vocale déterminée, et qui détermine l'objet environnant à partir des données amenées concernant le geste de pointage détecté, en ce que
- une orientation d'un doigt de l'utilisateur et, à partir de là, une direction spatiale par rapport au véhicule en direction de l'objet environnant est déterminée,
- la position et l'orientation du véhicule sont déterminées,
- une indication de position de l'objet environnant est déterminée à partir de la position et de l'orientation déterminées du véhicule et de la direction spatiale déterminée, et
- par le biais de l'indication de position de l'objet environnant, l'objet environnant est reconnu dans des données cartographiques numériques, et l'instruction vocale déterminée est exécutée ; et
- une unité d'envoi (14, 15), par le biais de laquelle une confirmation que l'objet environnant a été reconnu peut être envoyée à l'utilisateur ;
**caractérisé en ce que**
- par le biais de l'unité d'envoi (14, 15), un aperçu des instructions vocales possibles pour les options de commande disponibles pour l'objet environnant reconnu peut être envoyé à l'utilisateur ; et
- par le biais de l'unité d'évaluation et de commande (12), l'instruction vocale déterminée est exécutée lorsque l'option de commande correspondant à l'instruction vocale déterminée est disponible pour l'objet environnant reconnu.

11. Dispositif selon la revendication 10, dans lequel
- l'unité de détection de geste (7) comprend un ou plusieurs des capteurs suivants : un capteur d'image, un capteur radar, un capteur à ultrasons ;
- l'unité d'entrée (13) comprend au moins un microphone ; et
- l'unité d'envoi comprend une ou plusieurs des unités suivantes : un écran (15), un ou plusieurs haut-parleurs (14).

12. Dispositif selon la revendication 7 ou 8, dans lequel une ou plusieurs des unités suivantes sont prévues : une unité de télécommunication (18), une unité de navigation (19), avec laquelle une fonction de véhicule en rapport avec l'objet environnant reconnu est exécutée, une unité de détermination de poses (20) pour déterminer la position et l'orientation du véhicule, un capteur de caméra (11) pour la détection optique de l'objet environnant, une unité d'analyse d'images (17) pour la reconnaissance de l'objet environnant.

13. Véhicule, qui présente un dispositif selon l'une des revendications 10 à 12.
